# FASCICULE DE BREVET EUROPEEN

(11) **EP 3 550 461 B1**
(45) Date de publication et mention de la délivrance du brevet: **14.10.2020**
(21) Numéro de dépôt: 19160987.4
(22) Date de dépôt: 06.03.2019
(51) Int. Cl.: G06F 21/44

(54) **DISPOSITIF D'AUTHENTIFICATION DE PÉRIPHÉRIQUES CONNECTÉS SUR UN RÉSEAU ET PROCÉDÉ D'AUTHENTIFICATION ASSOCIÉ**
AUTHENTIFIZIERUNGSVORRICHTUNG VON MIT EINEM NETZ VERBUNDENEN PERIPHERIEGERÄTEN, UND ENTSPRECHENDES AUTHENTIFIZIERUNGSVERFAHREN
DEVICE FOR AUTHENTICATING PERIPHERALS CONNECTED TO A NETWORK AND ASSOCIATED AUTHENTICATION METHOD

(30) Priorité: 03.04.2018 FR 1852858
(43) Date de publication de la demande: 09.10.2019
(73) Titulaire: SLAT, 69410 Champagne au Mont d'Or (FR)
(72) Inventeur: BADOIL, Denis, 69210 Bully (FR); BOCH, Stéphane, 69006 Lyon (FR)
(74) Mandataire: Cabinet Laurent & Charras

(56) Documents cités:
- US-A1- 2010 333 177
- US-A1- 2017 331 803
- RYAN GERDES ET AL: "Device Identification via Analog Signal Fingerprinting: A Matched Filter Approach", SYMPOSIUM ON NETWORK AND DISTRIBUTED SYSTEM SECURITY (N,, 1 février 2006 (2006-02-01), pages 1-11, XP007912212,

## Description

### DOMAINE TECHNIQUE

La présente invention concerne le domaine de l'authentification de périphériques connectés sur un réseau informatique.

L'invention concerne plus particulièrement l'authentification de périphériques connectés au moyen d'un câble réseau transmettant une énergie électrique en plus des données du réseau. Cette technologie d'alimentation est appelée «POE» (selon l'expression anglo-saxonne « *Power Over Ethernet* ») dans la littérature.

Au sens de l'invention, un périphérique peut correspondre à un ordinateur, un système embarqué, un dispositif électromécanique tel qu'une caméra, un contacteur de porte, une climatisation connectée ou à tout autre système qui peut être alimenté par un câble réseau.

Ainsi, l'invention peut être utilisée dans un grand nombre de secteurs d'activité pour gérer des équipements diverses.

### ART ANTERIEUR

Pour authentifier un périphérique sur un réseau, il est connu de demander l'adresse physique du périphérique et de vérifier si cette adresse physique est enregistrée dans une liste d'adresses prédéfinies. L'adresse physique est plus connue sous l'acronyme adresse MAC pour « *Media Access Control* » dans la littérature. Cette adresse MAC est censée être unique pour chaque périphérique. Cependant, il est possible de modifier cette adresse MAC et, ainsi, de contourner l'authentification réalisée par l'adresse MAC. En outre, il peut être contraignant de rechercher l'adresse MAC d'un périphérique et de l'enregistrer sur le dispositif d'authentification lors de l'installation d'un nouveau périphérique.

Il existe beaucoup d'autres systèmes d'authentification plus sécurisés. Cependant, ces systèmes d'authentification sont souvent plus complexes à mettre en œuvre que l'authentification par adresse MAC.

US2017/331803 A1 divulgue des systèmes et procédés d'utilisation d'un défi d'alimentation physique pour authentifier un dispositif. Dans un mode de réalisation, cette authentification est effectuée en demandant au dispositif d'extrémité d'effectuer une signature d'alimentation spécifique. XP007912212 étudie l'utilisation des caractéristiques analogiques et numériques des appareils numériques à des fins de sécurité telles que la détection d'intrusion et l'authentification.

Au sens de l'invention, un périphérique peut correspondre à un ordinateur, un système embarqué ou un appareil électromécanique. L'invention vise particulièrement à authentifier des appareils assurant le fonctionnement structurel d'un bâtiment ou d'une agglomération. Les appareils concernés peuvent être une alimentation commandée, une caméra, un dispositif de contrôle d'accès d'une porte, un système d'alarme, une climatisation, etc... Il n'est pas rare d'utiliser plus d'un millier d'appareils pour assurer le fonctionnement structurel d'une tour en comptant les dispositifs de contrôle d'accès associés à chaque porte, les dispositifs de surveillance, les dispositifs de climatisation, et toutes les alimentations commandées.

Tous ces appareils sont classiquement connectés sur un ou plusieurs réseaux afin d'assurer une maintenance globale ou semi-globale de l'ensemble des appareils. Cependant, ces appareils présentent une grande hétérogénéité et embarquent classiquement très peu de puissance de calcul de sorte qu'il n'est pas possible d'utiliser des méthodes d'authentification complexes avec un programme exécuté sur les appareils.

En outre, lors du déploiement ou du remplacement de ces appareils, il peut être fastidieux de rechercher l'adresse MAC de chaque appareil pour la renseigner dans une centrale d'authentification.

La centrale d'authentification est également un point sensible d'une architecture d'authentification car elle comporte classiquement des informations stratégiques sur les appareils autorisés à se connecter sur un réseau. Ainsi, si un pirate arrive à entrer dans cette centrale d'authentification, il peut modifier un grand nombre de droits et déstabiliser tout un système informatique. L'invention vise également à limiter l'impact d'un piratage sur la globalité d'un système informatique.

Le problème technique de l'invention est donc de fournir un dispositif d'authentification permettant d'authentifier simplement un périphérique tout en limitant les risques et l'impact d'un piratage du dispositif d'authentification.

### EXPOSE DE L'INVENTION

Pour résoudre ce problème technique, l'invention propose de réaliser une authentification d'un périphérique au niveau d'un dispositif qui assure une alimentation électrique du périphérique par un câble réseau selon la technologie POE.

L'invention est issue du constat selon lequel le profil de consommation de courant lors de l'initialisation d'un périphérique connecté en POE ne varie pas en fonction de la tension d'alimentation, du temps de coupure du périphérique ou du mode de fonctionnement du périphérique.

Il existe donc une signature physique propre à chaque périphérique connecté en POE, signature qui est visible lorsque les variations du courant d'initialisation du périphérique sont observées. Cette signature physique est liée à l'architecture électronique du périphérique, c'est-à-dire la structure et la tolérance de son convertisseur, la nature des composants électroniques, la topologie des composants et les perturbations électromagnétiques qui en découlent ...

La présente invention propose d'observer les variations du courant d'initialisation du périphérique connecté en POE et de comparer ces variations avec des variations connues de sorte à authentifier un périphérique si les variations de son courant d'initialisation correspondent à des variations connues.

A cet effet, selon un premier aspect, l'invention concerne un dispositif d'authentification d'au moins un périphérique connecté par un câble réseau, ledit dispositif d'authentification comportant des moyens d'injection d'une tension électrique dans ledit câble réseau de sorte à alimenter ledit au moins un périphérique.

L'invention se caractérise en ce que ledit dispositif d'authentification comporte :
- des moyens de supervision du courant consommé par ledit au moins un périphérique au cours du temps ;
- des moyens de détection d'une phase d'initialisation dudit moins un périphérique dans l'évolution du courant au cours du temps ;
- des moyens d'identification de ladite phase d'initialisation avec au moins une phase d'initialisation connue ; et
- des moyens d'authentification dudit au moins un périphérique si ladite phase d'initialisation correspond à au moins une phase d'initialisation connue.

L'invention permet ainsi d'authentifier un périphérique au moyen de sa signature physique, observable lors de sa phase d'initialisation. Ainsi, cette authentification ne nécessite pas d'installer un programme sur le périphérique et peut être réalisée avec des traitements très simples au niveau du dispositif d'authentification. Les traitements à réaliser sont tellement simples qu'ils peuvent être implémentés sur des circuits logiques ou sur un composant électronique peu performant, tel qu'un microcontrôleur.

Ce faisant, les traitements d'authentification peuvent être implantés au plus près du périphérique, c'est-à-dire dans un injecteur POE ou dans un commutateur réseau intégrant une alimentation POE. Il s'ensuit que, si l'alimentation POE ou le commutateur venaient à être piraté, les périphériques qui ne sont pas connectés sur ces appareils ne seraient pas en danger contrairement à un système d'authentification centralisé.

Selon un exemple d'application de l'invention, si un pirate débranche une climatisation connectée d'un bâtiment pour brancher un dispositif espion avec l'adresse MAC de la climatisation connectée, le dispositif espion aura un circuit électronique distinct du circuit électronique de la climatisation connectée et les variations de son courant d'initialisation seront également distinctes. Ainsi, le dispositif espion ne sera pas authentifié.

Selon un mode de réalisation, ledit dispositif d'authentification comporte des moyens d'alerte configurés pour se déclencher lorsqu'un périphérique n'est pas authentifié.

Ce mode de réalisation permet de prévenir un administrateur en cas de tentative d'intrusion dans un système informatique d'un bâtiment. Ces moyens d'alerte peuvent être transmis par courriel, par message sur un téléphone portable, par une alarme ou par tout autre moyen connu adapté au caractère sécuritaire du système à protéger.

Cette authentification par la signature physique propre à chaque périphérique connecté en POE peut également être complémentaire avec un autre type d'authentification, par exemple une authentification par adresse MAC.

Selon un mode de réalisation, ledit dispositif d'authentification comporte des moyens d'obtention d'une adresse physique dudit au moins un périphérique, et des moyens de caractérisation dudit au moins un périphérique en fonction de son adresse physique, l'identification de ladite phase d'initialisation dudit au moins un périphérique avec au moins une phase d'initialisation connue étant réalisée à partir d'au moins une phase d'initialisation connue pour le périphérique caractérisé par lesdits moyens de caractérisation.

Ce mode de réalisation permet de limiter le temps de recherche de correspondance entre la phase d'initialisation du périphérique et les phases d'initialisation connues car les phases d'initialisation connues sont limitées. En outre, ce mode de réalisation améliore la sécurité du dispositif d'authentification car un appareil pirate doit surmonter deux protections de natures distinctes pour pénétrer sur le réseau.

En plus de l'amélioration de l'authentification, l'invention permet également de faciliter l'installation et la maintenance des périphériques. En effet, la détection et l'enregistrement d'une phase d'initialisation d'un périphérique sont souvent plus simples à réaliser que la recherche d'une adresse MAC d'un périphérique et l'enregistrement de cette adresse MAC sur un serveur d'authentification.

Selon un mode de réalisation, ledit dispositif d'authentification comporte des moyens d'enregistrement d'une phase d'initialisation de sorte à compléter lesdites phases d'initialisations connues par ledit dispositif d'authentification.

Ce mode de réalisation permet à un opérateur d'installer simplement un nouveau périphérique en positionnant le dispositif d'authentification dans le mode d'enregistrement et en alimentant une première fois le périphérique à authentifier.

Ainsi, la signature physique du périphérique peut être simplement captée et sauvegardée dans une mémoire du dispositif d'authentification.

En outre, il est possible de permettre l'authentification d'appareils similaires en ajustant la tolérance de reconnaissance des phases d'initialisation connues, facilitant ainsi le processus de remplacement. En effet, lorsqu'un appareil est remplacé par un appareil de remplacement similaire, les valeurs des composants des deux appareils sont distinctes, au moins en raison des tolérances de fabrication. En ajustant la tolérance de reconnaissance, il est possible d'authentifier un appareil de remplacement sans requérir une phase de mémorisation de sa phase d'initialisation.

Selon un mode de réalisation, ledit dispositif d'authentification comporte des moyens de filtrage de l'évolution du courant dans ladite phase d'initialisation, lesdits moyens d'identification de ladite phase d'initialisation étant réalisés à partir des données de ladite phase d'initialisation filtrée.

Ce mode de réalisation permet d'améliorer la précision de la comparaison entre la phase d'initialisation détectée et au moins une phase d'initialisation connue.

Selon un mode de réalisation, le dispositif d'authentification correspond à un injecteur d'énergie électrique dans un câble réseau ou à un commutateur réseau.

Ce mode de réalisation permet d'intégrer tous les traitements au plus proche du périphérique de sorte à protéger les autres périphériques du réseau d'une attaque centralisée.

En variante, le dispositif d'authentification de l'invention peut intégrer plusieurs composants physiques reliés entre eux par un réseau.

Par exemple, la détection de la phase d'initialisation peut être réalisée dans un commutateur réseau et transmisse à un serveur qui assure la comparaison et l'authentification de cette phase d'initialisation avec des phases connues.

Selon un mode de réalisation, ladite au moins une phase d'initialisation connue est obtenue à partir d'un serveur sécurisé.

Ce mode de réalisation permet de protéger efficacement les phases d'initialisation connues. Lorsqu'une authentification est réalisée à la fois par la signature physique propre à chaque périphérique connecté en POE et par son adresse MAC, les serveurs des adresses MAC et des phases d'initialisation connues sont préférentiellement distincts.

Selon un second aspect, l'invention concerne un procédé d'authentification d'au moins un périphérique connecté par un câble réseau assurant une alimentation électrique dudit au moins un périphérique, ledit procédé comportant les étapes suivantes :
- supervision du courant consommé par ledit au moins un périphérique au cours du temps ;
- détection d'une phase d'initialisation dudit moins un périphérique dans l'évolution du courant au cours du temps ;
- identification de ladite phase d'initialisation avec au moins une phase d'initialisation connue ; et
- authentification dudit au moins un périphérique si ladite phase d'initialisation correspond à au moins une phase d'initialisation connue.

Selon un mode de réalisation, le procédé comporte également les étapes suivantes :
- obtention de l'adresse physique dudit au moins un périphérique, et
- caractérisation dudit au moins un périphérique en fonction de son adresse physique, l'identification de ladite phase d'initialisation dudit au moins un périphérique avec au moins une phase d'initialisation connue étant réalisée à partir d'au moins une phase d'initialisation connue pour le périphérique caractérisé dans ladite étape de caractérisation.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 5 représentent :
- figure 1 : une représentation schématique d'un injecteur d'énergie électrique selon un mode de réalisation de l'invention ;
- figure 2 : une représentation schématique d'un commutateur réseau selon un mode de réalisation de l'invention ;
- figure 3 : un organigramme d'un procédé d'authentification d'un périphérique selon un premier mode de réalisation de l'invention ;
- figure 4 : un organigramme d'un procédé d'authentification d'un périphérique selon un second mode de réalisation de l'invention ; et
- figure 5 : deux représentations temporelles de la tension et du courant d'alimentation d'un périphérique alimenté par un câble réseau.

### DESCRIPTION DETAILLEE DE L'INVENTION

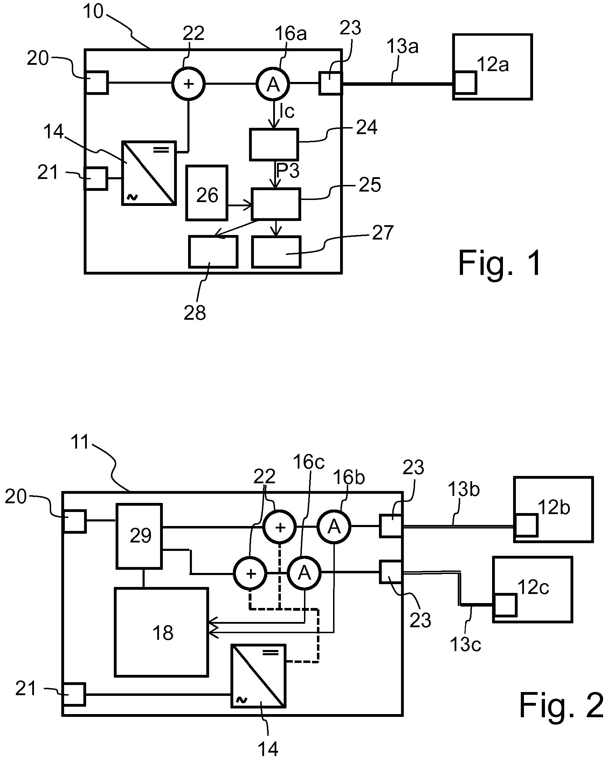

La figure 1 illustre un injecteur d'énergie électrique **10,** dont la fonction principale est d'injecter une tension électrique sur un fil d'un câble réseau **13a,** non utilisé pour transmettre des données. Un injecteur **10** comporte classiquement une entrée réseau **20,** de sorte à recevoir un câble réseau sans alimentation électrique, et une sortie réseau **23** configurée pour connecter un périphérique **12a** selon la technologie POE, c'est-à-dire en utilisant le câble réseau **13a** pour alimenter électriquement le périphérique **12a.**

Pour injecter cette alimentation électrique, l'injecteur **10** comporte une entrée **21** de tension alternative, destinée à être reliée à une prise secteur, et un convertisseur alternatif-continu **14.**

La tension continue, issue du convertisseur, est injectée sur un fil du câble réseau **13a** par un assembleur **22.** En variante, l'assemblage des fils acheminant les données avec le fil acheminant l'énergie électrique peut être réalisé directement au niveau des broches du connecteur de la sortie réseau **23.**

En plus de ces éléments connus, l'injecteur **10** comporte des moyens de supervision du courant **Ic** consommé par le périphérique **12a,** par exemple un ampèremètre ou tout autre dispositif permettant d'acquérir le courant au cours du temps.

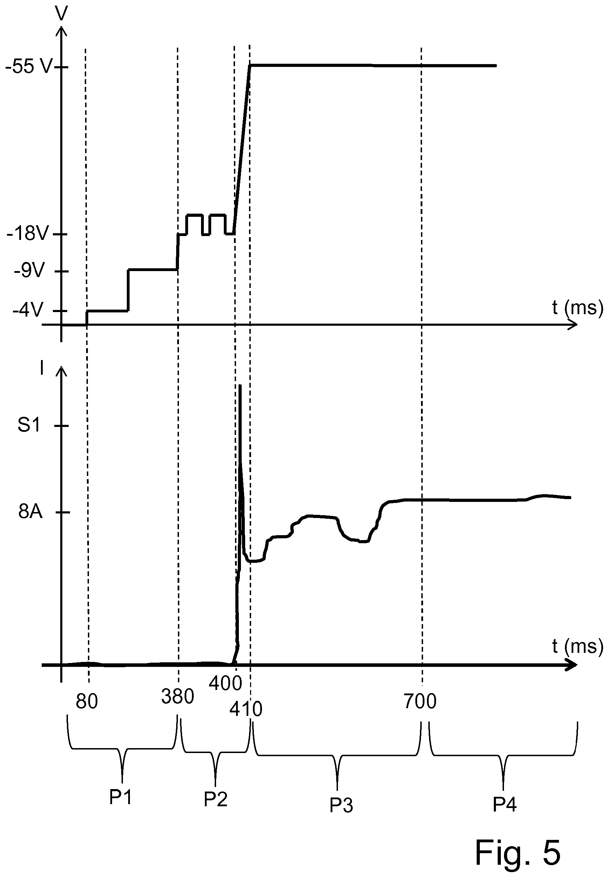

Cette mesure de courant **Ic** est transmise à des moyens de détection d'une phase d'initialisation **P3** dans l'évolution du courant **Ic.** Tel qu'illustré sur la figure 5, il existe plusieurs phases **P1-P4** dans l'alimentation POE.

La première phase **P1** consiste à détecter un périphérique **12a** supportant la technologie POE. Pour ce faire, l'injecteur **10** et le périphérique **12a** modulent leurs impédances et l'injecteur **10** fait évoluer la tension d'alimentation entre 0, -9 volts et -18 volts. Après, cette première phase **P1,** l'injecteur **10** sait s'il peut alimenter ou non un périphérique **12a** qui supporte la technologie POE.

Si l'injecteur **10** sait qu'il peut alimenter un périphérique **12a** qui supporte la technologie POE, une seconde phase **P2** de communication va être réalisée de sorte à détecter le type de POE qui est utilisé par le périphérique **12a** et à augmenter le niveau d'alimentation jusqu'au niveau typique de l'alimentation POE, c'est-à-dire -55 volts.

Jusqu'à cette augmentation de la tension d'alimentation, le courant **Ic** est sensiblement nul car le périphérique **12a** n'accepte pas encore de recevoir la tension d'alimentation et il ne consomme pas de courant **Ic.**

Lorsque la tension est augmentée pour atteindre le niveau d'alimentation typique, c'est-à-dire entre 400 et 410 ms dans l'exemple de la figure 5, l'évolution du courant **Ic** présente un pic de courant. Suite à ces phases **P1-P2** de négociation entre l'injecteur **10** et le périphérique **12a,** la tension est constante a -55 volts.

Contrairement à la tension, le courant **Ic** varie grandement suite à la fin de ces phases **P1-P2** de négociation lors d'une phase d'initialisation **P3** jusqu'à atteindre une phase de stabilisation **P4** pour laquelle le périphérique **12a** est dans un régime de fonctionnement stabilisé et le courant **Ic** est constant.

Lors de la réalisation de l'invention, il a été observé que cette phase d'initialisation **P3** est différente entre deux périphériques **12a** distincts, par exemple entre une caméra et un téléphone, formant ainsi une signature physique du périphérique **12a.** Cette signature physique est liée à l'architecture électronique du périphérique, c'est-à-dire la structure et la tolérance de son convertisseur, la nature des composants électroniques, la topologie des composants et les perturbations électromagnétiques qui en découlent ...

Les circuits électroniques de ces périphériques **12a** présentent des condensateurs internes, qui peuvent faire varier l'énergie rémanente à l'intérieur des circuits électroniques suite à une coupure d'alimentation. Contre toute attente, il a été observé que le profil de courant **Ic** dans cette phase d'initialisation **P3** ne varie pas en fonction du temps d'inactivité du circuit électronique, c'est-à-dire du temps pendant lequel les condensateurs internes ont été déchargés. Il a également été montré que les variations de la tension d'alimentation entre -48 volts et -55 volts n'impactent pas le profil de courant **Ic** dans cette phase d'initialisation **P3.** Dans le cas d'une caméra, il a également été montré que le mode d'utilisation de la caméra, par exemple en vision de jour ou infrarouge, ne modifie pas le profil de courant **Ic** dans cette phase d'initialisation **P3.**

Ainsi, l'injecteur **10** comporte des moyens pour détecter le début de cette phase d'initialisation **P3** en prenant en considération la forme du profil de courant **Ic** et/ou la forme du profil de la tension d'alimentation. Par exemple, les moyens de détection peuvent correspondre à un circuit logique **24** apte à réaliser la détection du franchissement d'un seuil **SI** de sorte à détecter la formation du pic de courant. En variante, l'injecteur **10** peut détecter l'augmentation de la tension avant d'acquérir la phase d'initialisation **P3.** La fin de cette phase d'initialisation **P3** peut être programmée après une durée prédéterminée, par exemple 400 ms.

Lorsque la phase d'initialisation **P3** est acquise, elle est transmise à des moyens d'identification de cette phase d'initialisation **P3** par rapport à des phases d'initialisation connues. Par exemple, les phases d'initialisation connues peuvent être stockées sur une base de données **26** intégrée à l'injecteur **10.**

La comparaison entre la phase d'initialisation **P3** et les phases d'initialisation connues peut être réalisée pour tous les moyens connus, par exemple une méthode des moindres carrés ou un réseau de neurones. Tel qu'illustré sur la figure 1, cette comparaison est réalisée par un circuit électronique **25** recevant la phase d'initialisation **P3** et les phases d'initialisation connues.

Une authentification du périphérique **12a** est réalisée lorsque la différence entre la phase d'initialisation **P3** et l'une des phases d'initialisation connues est inférieure à une valeur seuil, par exemple 5%. De préférence, un filtrage peut être réalisé sur la phase d'initialisation **P3** préalablement à la comparaison avec les phases d'initialisation connues.

Ces phases d'initialisation connues peuvent être préprogrammées dans la base de données **26** et/ou des moyens peuvent permettre à l'injecteur **10** d'enregistrer une phase d'initialisation **P3** lors de l'installation d'un nouveau périphérique **12a.**

Si le périphérique **12a** est authentifié, un voyant **27** peut s'allumer brièvement. Dans le cas contraire, si le périphérique **12a** n'est pas authentifié, une alarme **28** peut être déclenchée.

La figure 2 illustre un second mode de réalisation de l'invention dans lequel le dispositif correspond à un commutateur réseau **11** comportant une alimentation POE. De manière classique, un commutateur réseau **11** comporte un organe de routage **29** configuré pour connecter plusieurs périphériques **12b-12c** avec un réseau acheminé depuis une entrée réseau **20.**

Le commutateur réseau intègre également une entrée **21** de tension alternative, destinée à être reliée à une prise secteur, et un convertisseur alternatif-continu **14.** La tension continue, issue du convertisseur **14,** est injectée sur un fil de plusieurs câbles réseau **13b-13c** par plusieurs assembleurs **22.** Le commutateur **11** peut connecter des périphériques qui n'utilisent pas la technologie POE et des périphériques qui utilisent la technologie POE.

Comme dans le premier mode de réalisation, le commutateur **11** comporte des moyens de supervision **16b-16c** des courants consommés par chaque périphérique **12b-12c** connecté en POE. Dans le commutateur **11,** l'ensemble des traitements de ces courants, nécessaires à l'authentification des périphériques **12b-12c,** est réalisé dans un organe de supervision **18,** par exemple un microprocesseur ou un microcontrôleur.

Contrairement au premier mode de réalisation, le commutateur **11** n'intègre pas de base de données **26** pour stocker les phases d'initialisation connues, mais il est connecté sur l'organe de routage **29** de sorte qu'il peut communiquer par le réseau avec un serveur sécurisé externe pour obtenir ces phases d'initialisation connues.

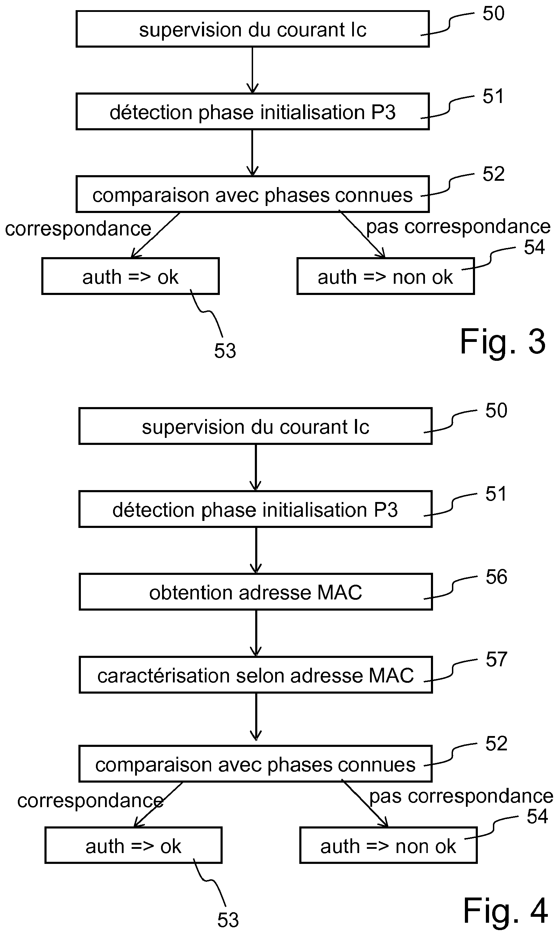

Avec l'injecteur **10** de la figure 1 ou le commutateur **11** de la figure 2, il est donc possible d'authentifier un périphérique **12a-12c** en suivant les étapes de l'organigramme de la figure 3. Une première étape **50** consiste à superviser le courant **Ic** consommé par le périphérique **12a-12c.** Une seconde étape **51** réalise la détection de la phase d'initialisation **P3** en utilisant les connaissances de la figure 5 sur l'évolution attendue du courant et/ou de la tension lors de l'alimentation d'un périphérique **12a-12c.** Lorsque la phase d'initialisation **P3** est détectée, la troisième étape **52** vise à comparer cette phase d'initialisation **P3** avec des phases d'initialisation connues.

Si une correspondance existe, l'organigramme passe à l'étape **53** confirmant l'authentification du périphérique **12a-12c.** En revanche, s'il n'existe pas de correspondance, l'organigramme passe à l'étape **54** indiquant un problème d'authentification.

Une variante de cet organigramme est illustrée sur la figure 4 avec une double authentification par adresse MAC et par l'authentification de la phase d'initialisation **P3.** Suite à l'étape **51** de détection de la phase d'initialisation **P3** ou parallèlement à cette étape **51,** une obtention de l'adresse MAC est réalisée dans une étape **56.** Cette adresse MAC est utilisée dans une étape **57** pour caractériser le périphérique **12a-12c** connecté en POE. De préférence, le dispositif **10-11** intègre une base de données reliant chaque adresse MAC connue avec une description du périphérique **12a-12c** correspondant à l'adresse MAC.

Contrairement au mode de réalisation de la figure 3, la comparaison **52** de la phase d'initialisation **P3** n'est pas effectuée sur toutes les phases d'initialisation connues, mais uniquement sur la ou les phases d'initialisation correspondant au périphérique caractérisé par l'adresse MAC obtenue lors de l'étape **56.**

L'invention permet ainsi de fournir un moyen d'authentification pour un périphérique connecté en POE, plus difficile à contourner que le filtrage par l'adresse MAC et plus simple à implémenter.

## Revendications

1. Dispositif d'authentification (10, 11) d'au moins un périphérique (12a-12c) connecté par un câble réseau (13a-13c), ledit dispositif d'authentification (10, 11) comportant des moyens d'injection (22) d'une tension électrique dans ledit câble réseau (13a-13c) de sorte à alimenter ledit au moins un périphérique (12a-12c), ***caractérisé* en ce que** ledit dispositif d'authentification (10, 11) comporte :
- des moyens de supervision (16a-16c) du courant consommé par ledit au moins un périphérique (12a-12c) au cours du temps ;
- des moyens de détection (18, 24) d'une phase d'initialisation (P3) dudit moins un périphérique (12a-12c) dans l'évolution du courant au cours du temps ;
- des moyens d'identification (18, 25) de ladite phase d'initialisation (P3) avec au moins une phase d'initialisation connue ; et
- des moyens d'authentification (18, 27) dudit au moins un périphérique (12a-12c) si ladite phase d'initialisation (P3) correspond à au moins une phase d'initialisation connue.

2. Dispositif d'authentification selon la revendication 1, dans lequel ledit dispositif d'authentification (10, 11) comporte des moyens d'alerte (18, 28) configurés pour se déclencher lorsqu'un périphérique (12a-12c) n'est pas authentifié.

3. Dispositif d'authentification selon la revendication 1 ou 2, dans lequel ledit dispositif d'authentification (10, 11) comporte :
- des moyens d'obtention d'une adresse physique dudit au moins un périphérique (12a-12c), et
- des moyens de caractérisation dudit au moins un périphérique (12a-12c) en fonction de son adresse physique,
l'identification de ladite phase d'initialisation (P3) dudit au moins un périphérique (12a-12c) avec au moins une phase d'initialisation connue étant réalisée à partir d'au moins une phase d'initialisation connue pour le périphérique **caractérisé par** lesdits moyens de caractérisation.

4. Dispositif d'authentification selon l'une des revendications 1 à 3, dans lequel ledit dispositif d'authentification (10, 11) comporte des moyens d'enregistrement d'une phase d'initialisation (P3) de sorte à compléter lesdites phases d'initialisations connues par ledit dispositif d'authentification (10, 11).

5. Dispositif d'authentification selon l'une des revendications 1 à 4, dans lequel ledit dispositif d'authentification (10, 11) comporte des moyens de filtrage de l'évolution du courant dans ladite phase d'initialisation (P3), lesdits moyens d'identification (18, 25) de ladite phase d'initialisation (P3) étant réalisés à partir des données de ladite phase d'initialisation filtrée.

6. Dispositif d'authentification selon l'une des revendications 1 à 5, dans lequel ledit dispositif d'authentification (10, 11) correspond à un injecteur (10) d'énergie électrique dans un câble réseau ou à un commutateur réseau (11).

7. Dispositif d'authentification selon l'une des revendications 1 à 6, dans lequel ladite au moins une phase d'initialisation connue est obtenue à partir d'un serveur sécurisé.

8. Procédé d'authentification d'au moins un périphérique (12a-12c) connecté par un câble réseau (13a-13c) assurant une alimentation électrique dudit au moins un périphérique (12a-12c), ***caractérisé* en ce qu'**il comporte les étapes suivantes :
- supervision (50) du courant consommé par ledit au moins un périphérique (12a-12c) au cours du temps ;
- détection (51) d'une phase d'initialisation (P3) dudit moins un périphérique (12a-12c) dans l'évolution du courant au cours du temps ;
- identification (52) de ladite phase d'initialisation (P3) avec au moins une phase d'initialisation connue ; et
- authentification (53) dudit au moins un périphérique (12a-12c) si ladite phase d'initialisation (P3) correspond à au moins une phase d'initialisation connue.

9. Procédé d'authentification selon la revendication 8, dans lequel le procédé comporte également les étapes suivantes :
- obtention (56) de l'adresse physique dudit au moins un périphérique (12a-12c), et
- caractérisation (57) dudit au moins un périphérique (12a-12c) en fonction de son adresse physique
l'identification de ladite phase d'initialisation (P3) dudit au moins un périphérique (12a-12c) avec au moins une phase d'initialisation connue étant réalisée à partir d'au moins une phase d'initialisation connue pour le périphérique caractérisé dans ladite étape de caractérisation (57).

## Patentansprüche

1. Vorrichtung zur Authentifizierung (10, 11) mindestens eines Peripheriegerätes (12a-12c), verbunden über ein Netzkabel (13a-13c), dabei enthält diese Vorrichtung zur Authentifizierung (10, 11) Mittel zur Einspeisung (22) einer elektrischen Spannung in dieses Netzkabel (13a-13c), um so dieses mindestens eine Peripheriegerät (12a-12c) zu versorgen, **dadurch gekennzeichnet, dass** diese Vorrichtung zur Authentifizierung (10, 11) enthält:
- Mittel zur Überwachung (16a-16c) des von diesem mindestens eines Peripheriegerätes (12a-12c) im Laufe der Zeit verbrauchten Stroms;
- Mittel zur Erkennung einer (18, 24) Initialisierungsphase (P 3) dieses mindestens eines Peripheriegerätes (12a-12c) bei der Entwicklung des Stroms im Laufe der Zeit;
- Mittel zur Identifikation (18, 25) dieser Initialisierungsphase (P 3) mit mindestens einer bekannten Initialisierungsphase; und
- Mittel zur Authentifizierung (18, 27) dieses mindestens einen Peripheriegerätes (12a12c), wenn diese Initialisierungsphase (P3) mindestens einer bekannten Initialisierungsphase entspricht.

2. Vorrichtung zur Authentifizierung nach Anspruch 1, bei dem diese Authentifizierungsvorrichtung (10, 11) Warnvorrichtungen (18, 28) enthält, die dazu konfiguriert sind ausgelöst zu werden, wenn ein Peripheriegerät (12a-12c) nicht authentifiziert wird.

3. Vorrichtung zur Authentifizierung nach Anspruch 1 oder 2, bei dem diese Vorrichtung zur Authentifizierung (10, 11):
- Mittel zum Erhalt einer physischen Adresse von diesem mindestens einen Peripheriegerät (12a-12c) enthält, sowie
- Mittel zur Charakterisierung dieses mindestens einen Peripheriegerätes (12a-12c) in Abhängigkeit von seiner physischen Adresse;
die Identifikation der erwähnten Initialisierungsphase (P 3) dieses mindestens einen Peripheriegerätes (12a-12c) mit mindestens einer bekannten Initialisierungsphase wird dabei ausgehend von mindestens einer bekannten Initialisierungsphase für das Peripheriegerät ausgeführt, das durch die erwähnten Charakterisierungsmittel charakterisiert ist.

4. Vorrichtung zur Authentifizierung nach einem der Ansprüche 1 bis 3, bei dem die erwähntet Vorrichtung zur Authentifizierung (10, 11) Mittel zur Aufzeichnung einer Initialisierungsphase (P3) enthält, so dass diese erkannten Initialisierungsphasen durch diese Vorrichtung zur Authentifizierung (10, 11) ergänzt werden.

5. Vorrichtung zur Authentifizierung nach einem der Ansprüche 1 bis 4, bei der die erwähnte Vorrichtung zur Authentifizierung (10, I 1) Mittel zur Filterung der Stromentwicklung während der erwähnten Initialisierungsphase (P 3) enthält, die Identifikationsmittel (18, 25) der erwähnten Initialisierungsphase (P 3) werden ausgehend von den Daten dieser gefilterten Initialisierungsphase erstellt.

6. Vorrichtung zur Authentifizierung nach einem der Ansprüche 1 bis 5, bei dem diese Vorrichtung zur Authentifizierung (10, 11) einem Injektor (10) für elektrische Energie in einem Netzkabel oder einem Netzschalter (11) entspricht.

7. Vorrichtung zur Authentifizierung nach einem der Ansprüche 1 bis 6, bei dem diese mindestens eine bekannte Initialisierungsphase von einem gesicherten Server aus erhalten wird.

8. Verfahren zur Authentifizierung mindestens eines über ein Netzkabel (13a-13c) verbundenen Peripheriegerätes (12a-12c), das die Stromversorgung dieses mindestens einen Peripheriegerätes (12a-12c) enthält, ***dadurch gekennzeichnet, dass*** es die folgenden Schritte umfasst:
- Überwachung des von diesem mindestens einen Peripheriegerät (12a-12c) im Laufe der Zeit verbrauchten Stroms;
- Erkennung einer Initialisierungsphase (P 3) dieses mindestens einen Peripheriegerätes (12a-12c) bei der Entwicklung des Stroms im Laufe der Zeit;
- Identifikation dieser Initialisierungsphase (P 3) mit mindestens einer bekannten Initialisierungsphase; und
- Authentifizierung (53) dieses mindestens einen Peripheriegerätes (12a12c), wenn diese Initialisierungsphase (P3) mindestens einer bekannten Initialisierungsphase entspricht.

9. Verfahren zur Authentifizierung nach Anspruch 8, bei dem das Verfahren auch die folgenden Schritte enthält:
- Erhalt (56) einer physischen Adresse von diesem mindestens einen Peripheriegerät (12a-12c), und
- Charakterisierung (57) dieses mindestens einen Peripheriegerätes (12a-12c) in Abhängigkeit von seiner physischen Adresse,
die Identifikation der erwähnten Initialisierungsphase (P 3) dieses mindestens einen Peripheriegerätes (12a-12c) mit mindestens einer bekannten Initialisierungsphase wird dabei ausgehend von mindestens einer bekannten Initialisierungsphase für das Peripheriegerät ausgeführt, das während des erwähnten Charakterisierungsschritts charakterisiert ist (57).

## Claims

1. Authentication device (10, 11) of at least one peripheral (12a-12c) connected by a network cable (13a-13c), the said authentication device (10, 11) comprising injection means (22) of an electrical voltage into the said network cable (13a-13c) to supply the said at least one peripheral (12a-12c), ***characterised* in that** the said authentication device (10, 11) comprises:
- means of supervision (16a-16c) of the current consumed by the said at least one peripheral (12a-12c) in the course of time;
- means of detection (18, 24) of an initialisation phase P3) of the said at least one peripheral 12a-12c) as the current develops in the course of time;
- means of identification (18, 25) of the said initialisation phase (P3) with at least one known initialisation phase, and
- means of authentication (18, 27) of the said at least one peripheral (12a-12c) if the said initialisation phase (P3) corresponds to one known initialisation phase.

2. Authentication device equipment to claim 1, which the said authentication device (10, 11) comprises alerting means (18, 28) configured to trip when a peripheral (12a-12c) has not been authenticated.

3. Authentication device according to claim 1 or 2 in which the said authentication device (10, 11) comprises,
- means of obtaining a physical address of the at least one peripheral (12a-12c), and
- means of characterisation the at least one peripheral (12a-12c), depending on its physical address,
the identification of the said initialisation phase ()P3) of the at least one peripheral (12a-12c) with at least one known initialisation phase being obtained from at least one known initialisation phase for the peripheral, **characterised by** the said means of characterisation.

4. Authentication device according to 1 of the claims 1 to 3, in which the authentication device (10, 11) has means of recording an initialisation phase (P3) so as to complete the said known initialisation phases by the said authentication device (10, 11).

5. Authentication device according to one of the claims 1 to 4, in which the said authentication device (10, 11) comprises means of filtering the development of the current in the initialisation phase (P 3) being obtained from the data from the said filtered initialisation phase.

6. Authentication device according to one of the claims 1 to 5, in which the said authentication device (10, 11) corresponds to an electric energy injector (10) into a network cable, or a network switch (11).

7. Authentication device according to one the claims 1 to 6 in which the said at least one known initialisation phase is obtained from a secure server.

8. Process of authentication of at least one peripheral (12a-12c) connected by a network cable (13a-13c) ensuring an electric power supply of the said at least one peripheral (12a-12c), ***characterised* in that** it includes the following steps:
- supervision (15) of the current consumed by the said at least one peripheral (12a-2c) in the course of time;
- detection (51) of an initialisation phase (P3) of the at least one peripheral (12a-12c) as the current develops in the course of time;
- identification (52) of the said initialisation phase (P3) with at least one known initialisation phase; and
- authentication (53) of the said at least one peripheral (12a-12c) if the said initialisation phase (P3) corresponds to least one known initialisation phase.

9. Method of authentication according to the Claim 8, in which the method also includes the following steps:
- obtaining (56) the physical address of the said at least one peripheral (12a-12c), and
- characterisation (57) of the said at least one peripheral (12a-12c) as a function of its physical address
identification of the said initialisation phase (P3) of the said at least one peripheral (12a-12c) with at least one known initialisation phase being obtained from at least one known initialisation phase for the peripheral **characterised in** the said characterisation step (57).
